# EUROPEAN PATENT APPLICATION

(11) **EP 2 450 819 A1**
(43) Date of publication of application: **09.05.2012**
(21) Application number: 11184668.9
(22) Date of filing: 11.10.2011
(51) Int. Cl.: G06F 21/00, G06F 21/02

(54) **Electronic component with time-limited use**

(30) Priority: 08.11.2010 EP 10306225
(71) Applicant: Thomson Licensing, 92130 Issy-les-Moulineaux (FR)
(72) Inventor: Eluard, Marc, 92443 Issy-les-Moulineaux (FR); Maetz, Yves, 92443 Issy-les-Moulineaux (FR); Stahl, Niclas, 92443 Issy-les-Moulineaux (FR); Perrot, Sebastien, 92443 Issy-les-Moulineaux (FR)
(74) Representative: Ruellan-Lemonnier, Brigitte

(57) **Abstract**

An electronic device (100) with a limited time of use. The electronic device (100) comprises a physical interface (130) for removable connection to a host device (160), a processor (110) and a usage time limit module (120) with a counter. When the counter reaches a pre-determined value, the usage time limit module (120) is adapted to disable the electronic device (100), preferably by modifying the hardware of the electronic device (100), e.g. by disabling a communication line between the processor (110) and the physical interface (130), which may be effected by blowing a fuse. The usage time limit module (120) is powered by the host device (160) via a power supply (140) from the physical interface (130). In a preferred embodiment, the electronic device (100) is a storage device. In a further preferred embodiment, the physical interface (130) is a USB interface.

## Description

### TECHNICAL FIELD

The present invention relates generally to electronic components, and more particularly to an electronic component for which the use is limited in time.

### BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

It is sometimes desirable to limit the time that a user may access protected digital content, such as films or songs. A prime example of this is video rental.

US 2008/0157974 A1 presents a solution in which a Radio-frequency identification (RFID) tag is put on a support such as a DVD. The RFID tag is needed to access the content on the DVD; it may for example contain a decryption key needed to decrypt some of the content, advantageously so-called control words. The RFID tag may be disabled (and later re-enabled) based on time. The solution has an event, such as purchase or rental of the DVD, activate a countdown timer. The RFID tag is then enabled until the countdown timer expires, after which the RFID tag is disabled. While this solution may achieve its goal, it is also somewhat limited as to the possibilities, as the countdown starts directly upon occurrence of the event and then inexorably counts down.

European Patent Application 10305147.0, filed on the 15th of February 2010, takes this solution one step further by enabling a limitation to the time a rotating support, e.g. a DVD, is used. This is achieved by providing the RFID tag with a switch that powers a countdown timer only when the support rotates at or above a predetermined threshold value.

While the latter solution works well, a disadvantage is that it by nature is limited to rotating supports. It can therefore be appreciated that there is a need for a solution that provides a solution that limits access to content for a certain time in use, where the content is stored on non-rotating supports.

One such solution is taught in European Patent Application EP 1821230 teaches an external storage medium for storing data. The storage medium comprises a storage unit for storing data, a storage unit for storing an expiration condition, a counter or timer for measuring time or a number of events. When a control module detects that the medium has been detached from a host it starts the counter and access to the stored data is blocked when the expiration condition is reached. This solution only protects data dependent on the time the storage medium is not connected to the host.

It can therefore be appreciated that there is a need for a solution that limits the connected time in use of an electronic component. The present invention provides such a solution.

### SUMMARY OF INVENTION

In a first aspect, the invention is directed to an electronic device comprising a physical interface for removable connection to a host device and a usage time limit module with a counter. The usage time limit module is adapted to disable the electronic device when the counter reaches a pre-determined value and the time limit module is adapted to decrement the counter only when the physical interface is connected to the host device.

In a first preferred embodiment, the usage time limit module is powered by the host device via a power supply from the physical interface. It is advantageous that the usage time limit module is powered by the host device via a power supply from the physical interface only when the physical interface is connected to the host device.

In a second preferred embodiment, the usage time limit module is adapted to disable the electronic device by modifying the hardware of the electronic device. It is advantageous that the usage time limit module is adapted to modify the hardware by disabling a communication line in the electronic device. It is alternately advantageous that the usage time limit module is adapted to modify the hardware by disabling a power supply in the electronic device.

In a third preferred embodiment, the usage time limit module is adapted to disable the electronic device by blowing a fuse.

In a fourth preferred embodiment, the usage time limit module is adapted to disable the electronic device logically.

In a fifth preferred embodiment, the electronic device is a storage device.

In a sixth preferred embodiment, the physical interface is a USB interface.

### BRIEF DESCRIPTION OF DRAWINGS

Preferred features of the present invention will now be described, by way of non-limiting example, with reference to the accompanying drawings, in which

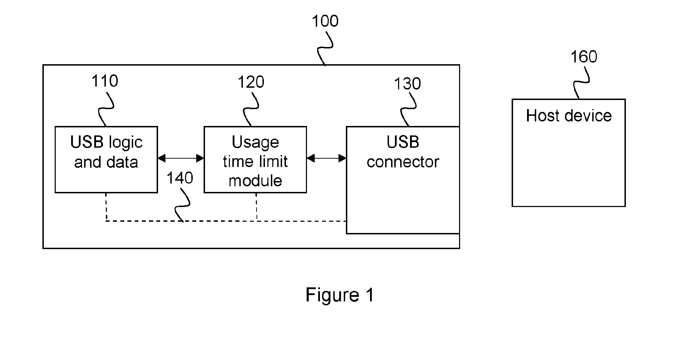

Figure 1 schematically illustrates a time limited electronic device according to a preferred embodiment of the present invention.

### DESCRIPTION OF EMBODIMENTS

A main idea of this invention is to add a temporal limitation to the usage of an electronic device. The electronic device is advantageously a content storage device, but may also be another kind of electronic device such as a smartcard (preferably connected via a standard smartcard reader). The electronic device is advantageously a USB device, for example a USB key, but it may also be a hard disk that is connected through another kind of interface. In brief, the electronic device comprises a usage time limit module having a countdown value that is initialized during manufacture (although it is also possible to set it later, for example during customization). by disabling the physical access. Whenever the electronic device is powered via an interface to another device, the usage time limit module decrements the countdown value. When the countdown value reaches zero, the electronic device inhibits its functioning, preferably by modifying its hardware, but it is also possible to use logical inhibition. After that, the electronic device is unusable, but the skilled person will appreciate that it is possible to inhibit just part of its functionality, in which case the electronic device continues to work, but in a different way.

Figure 1 schematically illustrates a time limited electronic device according to a preferred embodiment of the present invention, hereinafter using a USB key as a non-limitative example. The USB key 100 comprises a standard USB connector 130 and USB logic module 110 (at least one processor) that advantageously also is standard. The USB key 100 further comprises a usage time limit module 120 and preferably also memory (not shown). When the USB connector 130 is (removably) connected to and powered by a host device 160, the USB connector in turn powers the USB logic module 110 and the usage time limit (TUL) module 120 through a power supply 140. As the USB key 100 has no internal power source, the USB logic module 110 and the TUL module 120 are powered only when the USB key 100 is connected to (and powered by) the host device 160 via the USB connector 130. This means that the time in use that is limited is in fact the time that the USB key 100 is connected to the host device 160. In many cases, for example when the USB key stores a film, this is not a drawback since the USB key usually is connected only when the user desires to watch the film.

The TUL module 120 is advantageously implemented as a processor (not necessarily separate from the USB logic module 110) with a counter that, when powered, decrements from an initial countdown value (as already mentioned, preferably set during manufacture) towards zero. The skilled person will appreciate that there are many equivalent solutions, such as counting down to three or counting up towards a given number.

When the counter reaches zero, the TUL module 120 is adapted to disable the USB key 100. While logical inhibition is possible (for example by setting a flag in the USB logic module 110), physical disabling is preferred. This may be achieved by permanently disabling the power supply 140 between the USB connector 130 and the USB logic module 110 (or the memory) or by destroying the communication line between the USB connector 130 and the USB logic module 110. An advantageous way to physically disable the USB key 100 is by so-called e-fusing during which a fuse (not shown) is burnt inside the USB key 100. Whichever way the USB device 100 is disabled, its USB logic module 110 is no longer physically accessible from the USB connector 130, leaving the electronic device 100 inoperative.

As already mentioned, the TUL module and the USB logic module are preferably embedded into a single module, in order to make it more difficult to bypass the time limitations imposed by the present invention.

Further, the logical enable/disable mechanism may be based on a simple logical gate, while the physical disable mechanism is preferably implemented by a physical fuse that may be blown to permanently disable the electronic module.

It will be appreciated that the present invention can ensure implementation of a time limit for the use of an electronic device. The time limit can be completely transparent to the user (except, of course, when the electronic device has been disabled). The present invention can allow time-limited storage of data on removable storage media.

A possible field of use is for so-called screeners for films that may be distributed to reviewers and to film festival jury members. With the invention it can be ascertained that the entire film on the screener is not shown more than once, while at the same time allowing a user to watch certain parts of the film more than once.

Each feature disclosed in the description and (where appropriate) the claims and drawings may be provided independently or in any appropriate combination. Reference numerals appearing in the claims are by way of illustration only and shall have no limiting effect on the scope of the claims.

## Claims

1. An electronic device (100) comprising:
- a physical interface (130) for removable connection to a host device (160);
and
a usage time limit module (120) with a counter, the usage time limit module (120) being adapted to disable the electronic device (100) when the counter reaches a pre-determined value;
the electronic device being **characterized in that** the time limit module (120) is adapted to decrement the counter only when the physical interface (130) is connected to the host device (160).

2. The electronic device of claim 1, wherein the usage time limit module (120) is powered by the host device (160) via a power supply (140) from the physical interface (130).

3. The electronic device of claim 2, wherein the usage time limit module (120) is powered by the host device (160) via a power supply (140) from the physical interface (130) only when the physical interface (130) is connected to the host device (160).

4. The electronic device of claim 1, wherein the usage time limit module (120) is adapted to disable the electronic device (100) by modifying the hardware of the electronic device.

5. The electronic device of claim 4, wherein the usage time limit module (120) is adapted to modify the hardware by disabling a communication line in the electronic device (100).

6. The electronic device of claim 4, wherein the usage time limit module (120) is adapted to modify the hardware by disabling a power supply (140) in the electronic device (100).

7. The electronic device of any previous claim, wherein the usage time limit module (120) is adapted to disable the electronic device (100) by blowing a fuse.

8. The electronic device of claim 1, wherein the usage time limit module (120) is adapted to disable the electronic device (100) logically.

9. The electronic device of claim 1, wherein the electronic device (100) is a storage device.

10. The electronic device of claim 1, wherein the physical interface (130) is a USB interface.
